# EUROPÄISCHE PATENTSCHRIFT

(11) **EP 0 695 621 B1**
(45) Veröffentlichungstag und Bekanntmachung des Hinweises auf die Patenterteilung: **21.11.2001**
(21) Anmeldenummer: 95110340.7
(22) Anmeldetag: 03.07.1995
(51) Int. Cl.: B29C 57/00

(54) **Verfahren und Vorrichtung zum Anformen von Flanschen an Rohre aus teilkristallinen Thermoplasten**
Process and apparatus for forming collars on partially cristaline thermoplastic tubes
Procédé et appareil pour la formation d'un collet sur des tubes en matières thermoplastiques partiellement cristalines

(30) Priorität: 04.07.1994 DE 4423372
(43) Veröffentlichungstag der Anmeldung: 07.02.1996
(73) Patentinhaber: Ruppert, Hans-Peter, D-65187 Wiesbaden (DE)
(72) Erfinder: Ruppert, Hans-Peter, D-65187 Wiesbaden (DE); Wendorff, Ernst, D-65232 Taunusstein (DE)
(74) Vertreter: Blumbach, Kramer & Partner GbR

(56) Entgegenhaltungen:
- FR-A- 1 195 472
- FR-A- 2 086 592
- US-A- 4 780 261

## Beschreibung

Die Erfindung bezieht sich auf ein Verfahren und eine Vorrichtung zum Anformen von Flanschen an Rohren aus unverenetzten und vernetzten Thermoplasten, insbesondere aus Polyolefinen, vornehmlich aus Polyethylen (VPE).

Die Herstellung von Flanschen aus thermoplastischen Rohren durch Aufwölben und Falten der Rohrwand ist an sich bekannt (FR-A-1 257 165). Man verwendet äussere Stützmuffen für das thermoplatische Rohr und läßt einen Bereich ungestützt, an welchem sich der Flansch ausbilden soll. In diesem ungestützten Bereich wölbt sich die Rohrwand nach aussen, wenn die axialen Muffen aneinander angenähert werden. Für die Verarbeitung kann das thermoplastische Rohr von innen erwärmt werden. Nachteilig an dem Verfahren ist der Umstand, daß immer ein Endstück des Rohres abgeschnitten werden muß, wenn man einen endständigen Flansch erzielen will. Ein weiterer Nachteil ergibt sich daraus, daß beim Stauchen das Material sich nicht immer nach außen wölbt, wonach fehlgeformte Flansche entstehen.

Um diesen Nachteil zu vermeiden, ist es auch schon bekannt (FR-A-2 582 568) mit Preßluftstößen auf die erwärmte Zone einzuwirken, damit sich diese sicher nach außen wölbt. Wie zuvor, verbleibt jedoch ein Endstück des Rohres am Flansch.

Ein Verfahren nach dem Oberbegriff des Anspruches 1 bzw. eine Vorrichtung nach dem Oberbegriff des Anspruches 6 ist aus der DE-AS-1 177 800 bekannt. Durch Aufschieben einer ringförmigen Anschlagswandung auf das zu verformende Rohr wird der zu verformende Rohrüberstand bestimmt, wonach ein Dorn mit Auslässen für heißes Druckgas in das Rohr geschoben wird und das heiße Druckgas den Rohrüberstand zur Bildung einer gewölbten U-förmigen Tasche ausdehnt. Eine geflanschte Druckplatte dient zum Zusammenpressen der Schenkel der Taschen und Verschweißung ihrer Innenflächen zu dem herzustellenden Flansch. Bei dieser Verfahrensweise wird keine teilbare Preßform zur Festspannung des Rohres verwendet und es erfolgt keine Aufwärmung des Rohrüberstandes auch von außen.

Es ist auch bekannt, die Rohrwandung mit einem Spreitzdorn auszuwölben (DE-A 39 20 814). Ein derartiges Verfahren setzt aber einen umfänglichen maschinentechnischen Aufwand voraus.

Gewisse Thermoplaste, insbesondere Polyolefine, können so vernetzt werden, daß sie ein Verhalten zwischen einem Thermoplasten und einem Duroplasten annehmen. Für Anwendungen ist insbesondere vernetztes Polyethylen mit einem Vernetzungsgrad von 75 % interessant, das als Rohrmaterial gemäß DIN 16892 verfügbar ist. Mit der Erfindung sollen breite Flansche, sogenannte Flanschteller, auch an solches Material angeformt werden können. Mit solchen Flanschtellern versehene Rohre können mit genormten Losflanschen an Kesseln, Schiebern oder anderen Normflanschen befestigt werden.

Der Erfindung liegt die Aufgabe zugrunde, ein Verfahren und eine Vorrichtung zum Anformen von Flanschen an Rohren von unvernetzten und vernetzten Thermoplasten, insbesondere Polyethylen, zu schaffen, bei der man auch breite Flansche herstellen kann und mit geringem gerätemäßigem Aufwand auskommt.

Die gestellte Aufgabe wird aufgrund der Maßnahmen der unabhängigen Ansprüche gelöst.

Bei der Erfindung wird ein Rohr mit passend abgeschnittenem Rohrende bereitgestellt, beispielsweise an einer Baustelle. Ein vorgegebenes Stück des Rohres wird im vorbestimmten Abstand von dem Rohrende eingespannt, so daß ein Rohrüberstand entsteht. Dieser Überstand und der Grenzbereich des Einspannrohrstücks werden auf Erweichungstemperatur des teilkristallinen Thermoplasten angewärmt. Danach wird der Rohrüberstand axial gestaucht, wobei sich der Rohrüberstand in seinem mittleren Bereich aufwölbt oder ausknickt, um zwei miteinander verbundene Ringscheiben zu bilden. Die radial äußeren Randbereiche der Ringscheiben werden gekühlt, um die erneute Teilkristallisation des Thermoplasten rasch herbeizuführen und den hergestellten Flansch zu stabilisieren.

Gerätemäßig ist eine teilbare Preßform aus aufeinander passenden Teilschalen vorgesehen, die jeweils einen engen Durchmesserbereich und einen weiten Durchmesserbereich bestimmen, wobei der enge Durchmesserbereich zum Einspannen des Rohres - auch mit Rücksicht auf dessen Erwärmung und damit Ausdehnung - ausgelegt ist und der weite Durchmesserbereich zur Aufnahme des Rohrüberstandes und Formung des herzustellenden Flansches ausgebildet ist. Die Heizeinrichtung mit mobilem Kopf ist zur Aufheizung des Rohres von innen und außen ausgebildet. Die aufgeheizte Rohrlänge entspricht außen der doppelten Flanschbreite und innen etwas mehr als der doppelten Flanschbreite. Der Heizkopf ist mobil, d.h. wird von dem Rohrüberstand entfernt, um Platz für einen antreibbaren Preßstempel zu schaffen. Der Preßstempel weist vorzugsweise einen dünnen Durchmesserbereich entsprechend dem Innendurchmesser des Rohres und einen dicken Durchmesserbereich entsprechend dem Außendurchmesser des herzustellenden Flansches auf und ist in einen nicht-kühlenden Oberflächenbereich sowie in einen kühlenden Oberflächenbereich unterteilt, wobei der nicht-kühlende Oberflächenbereich eine solche Temperatur bzw. eine solche geringe Wärmeleitfähigkeit besitzt, daß der auf Erwärmungstemperatur erwärmte Thermoplast an seinen Berührungsstellen mit diesen nicht-kühlenden Oberflächenbereichen des Preßstempels keine erneute Teilkristallisation erfährt, während an den Berührungsstellen mit den kühlenden Oberflächenbereichen des Stufenstempels eine rasche Herabsetzung der Temperatur des Thermoplasten auf teilkristalline Bedingungen erfolgt. Diese Verfahrensweise ermöglicht es, den Stufenstempel nach Ausführung seines Arbeitshubes relativ rasch wieder zurückzuziehen und einen genügend stabilisierten Flansch zurückzulassen, der an der Luft auskühlen und damit seinen Gebrauchszustand annehmen kann. Wie gesagt, kann dies an einer Baustelle erfolgen, d.h. mit einem bereits eingebauten Rohr. Man kann z.B. lange Rohrstücke von einem Rohrbündel abrollen und in Schächte oder Futterrohre verlegen und daraufhin einen Anschlußflansch am abgeschnittenen Ende des Rohrstücks anformen. Auch Zwischenstücke oder Paßstücke können hergestellt werden. Natürlich können Rohrflansche auch in einer Werkstatt erzeugt werden. Vorteilhaft ist in jedem Fall der geringe gerätemäßige Aufwand und der geringe Platzbedarf: Die teilbare Preßform zum Einspannen des Rohrendes kann sehr einfach sein und benötigt keine Kühlwasserversorgung. Als Heizeinrichtung kann ein handelsübliches pistolenförmiges Warmluftgebläse verwendet werden, auf dessen vorderes Ende der mobile Heizkopf gesteckt wird. Für unterschiedliche Durchmessergrößen der Rohre gibt es unterschiedliche mobile Heizköpfe, die aber jeweils sehr einfach aufgebaut sind. Der Preßstempel kann in seiner Masse aus Kunststoff bestehen und einen Ring aus Metall aufweisen, um nach Berührung mit den Außenbereichen des herzustellenden Flansches diesen zu kühlen. Je nach den Gegebenheiten kann man den Preßstempel durch eine Schraubspindel antreiben oder auch pneumatisch oder hydraulisch. Das Gesamtgerät bleibt jedenfalls einfach.

Weitere Einzelheiten der Erfindung werden anhand der Zeichnung beschrieben. Dabei zeigt:
- Fig. 1: einen Schnitt durch das eingespannte Ende eines Rohres mit aufgesetztem Heizkopf,
- Fig. 2: das eingespannte Rohrende während der Verformung durch einen Stufenstempel und
- Fig. 3: das eingespannte Rohr mit fertig hergestellten Flansch.

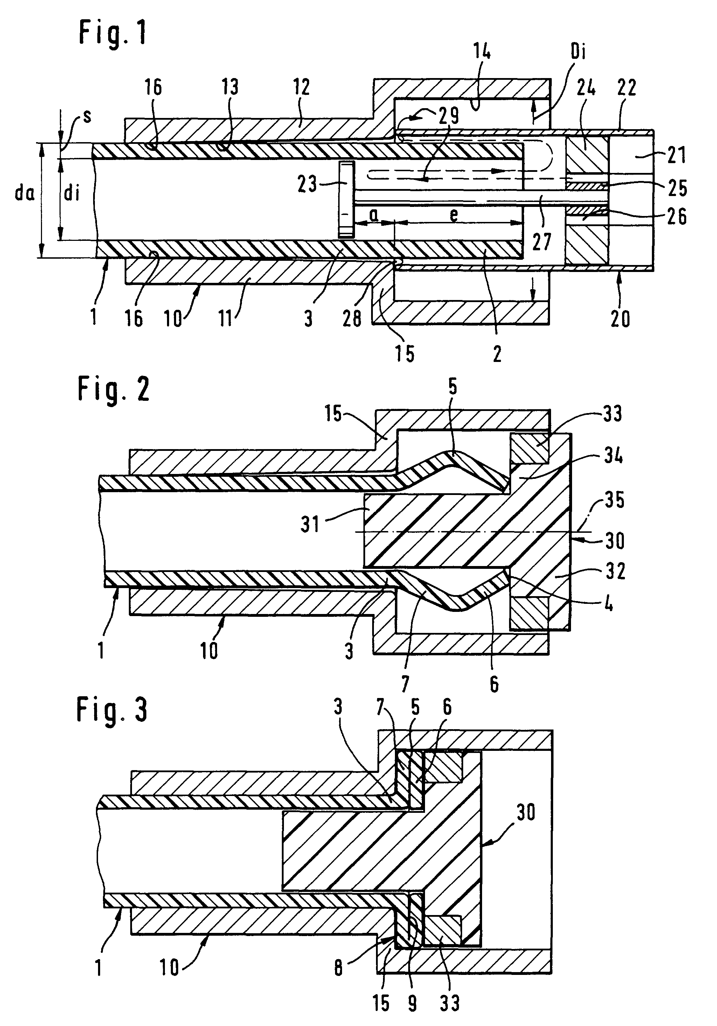

Es wird Bezug auf Fig. 1 genommen. Ein aus vernetztem Polyethylen (VPE) bestehendes Rohr 1 wird in eine teilbare Preßform 10 eingespannt. Die Form 10 besteht beispielsweise aus zwei Teilschalen oder Hälften 11, 12, die zusammengesetzt einen engen Durchmesserbereich 13 und einen weiten Durchmesserbereich 14 von Rohrhülsen bestimmen, die über eine Ringwand 15 miteinander verbunden sind. Die Rohrhülse mit dem engen Durchmesserbereich 13 weist glatte oder geriefte Eingriffsstellen 16 auf, die in der Nähe des äußeren Endes des engen Durchmesserbereichs 13 angeordnet sind. Der Durchmesser im engen Durchmesserbereich 13 nimmt zweckmäßigerweise von den Eingriffsstellen 16 nach innen hin bis zum Erreichen der Wand 15 zu, um erwartete Wärmedehnungen des Rohres 1 zu berücksichtigen. Die Länge der Rohrhülse und des engen Durchmesserbereichs 13 ist nicht kritisch und beträgt beispielsweise das dreifache des Durchmessers des Rohres 1 (dₐ = Außendurchmesser, dᵢ = Innendurchmesser, s = Rohrwanddicke).

Die teilbare Form 10 weist im weiten Durchmesserbereich 14 einen Innendurchmesser Dᵢ auf, der dem Außendurchmesser des herzustellenden Flansches entspricht. Die axiale Länge des weiten Durchmesserbereichs 14 beträgt etwas mehr als der Betrag Dᵢ minus dₐ. Wie ersichtlich, ist das Rohr 1 in die Form 10 so eingespannt, daß es mit einer Länge l in den weiten Durchmesserbereich 14 hineinragt. Diese Länge entspricht im übrigen dem Betrag von Dᵢ minus dᵢ minus s.

Wie ersichtlich, wird der Rohrüberstand 2 von einem Heizkopf 20 umgeben, der mit einem nicht dargestellten Warmluftheizgerät kuppelbar ist und hierzu eine Kupplungseinrichtung 21, eine äußere Tülle oder Muffe 22 und eine Prallscheibe 23 aufweist. Innerhalb der Muffe 22 schließt sich an die Aufsteckkupplungshälfte 21 ein Prallscheibenhalter 24 an, der eine Nabe 25 mit Luftdurchlaßöffnungen 26 besitzt. In der Nabe 25 ist eine Stange 27 befestigt, an deren Ende die Prallscheibe 23 sitzt. Am vorderen Ende der Muffe 22 ist eine Reihe von Luftdurchlaßöffnungen 28 vorgesehen, die als halbkreisförmige Aussparungen im vorderen Rand der Muffe 22 gestaltet sind. Wie ersichtlich, steht die Prallwand 23 um ein Stück a über die vordere Begrenzung der Muffe 22 vor, so daß das Rohr 1 im Inneren auch im Grenzbereich des Einspannrohrstückes zu dem Rohrüberstand 2 hin angewärmt werden kann. Der eingezeichnete Pfeil 29 gibt die Luftströmung an, die zur Anwärmung des Rohrüberstandes 2 und des Grenzbereichs 3 führt.

Die Anwärmtemperatur richtet sich nach dem vernetzten Thermoplasten, aus dem die Rohrwandung 1 besteht. Die Erfindung ist insbesondere auf vernetztes, teilkristallines Polyethylen anwendbar, das auch als Hart-Polyethylen bezeichnet wird. Solches Material wird auf 135 bis 140°C angewärmt, wodurch der teilkristalline Zustand verschwindet und das vorher trübe Material glasklar wird. In diesem Zustand läßt sich Hart-Polyethylen leicht verformen, und die neue Form läßt sich durch Herabsetzen der Temperatur einfrieren. Es sei jedoch bemerkt, daß der langkettige, vernetzte Thermoplast sich an seine alte Form erinnert, d.h. in diese alte Form zurückzukehren bestrebt ist. Wie noch erläutert wird, wird diesem Bestreben bei der Erfindung entgegengewirkt.

Der Heizkopf 20 wird von dem Rohr 1 entfernt, und statt dessen wird ein Stufenstempel 30 in den Rohrüberstand eingeführt (s. Fig. 2). Der Stufenstempel 30 weist einen dünnen Durchmesserbereich 31 entsprechend dem Innendurchmesser di des Rohres 1 und einen dicken Durchmesserbereich 32 entsprechend dem weiten Durchmesserbereich Dᵢ der Form 10 bzw. dem Außendurchmesser des herzustellenden Flansches auf. Der Stufenstempel 30 besteht größtenteils aus einem Material niedriger Wärmeleitfähigkeit, nämlich Kunststoff, und einem kleineren ringförmigen Bezirk 33 aus einem wärmeleitfähigen Material, nämlich Metall. Der Ring 33 ist auf der Innenseite radial außen des großen Durchmesserbereichs 32 angeordnet. Der Stufenstempel 30 wird in der ringförmigen Übergangszone 34 zwischen dem dünnen und dicken Durchmesserbereich von dem abgeschnittenen Ende 4 des Rohres 1 beaufschlagt, wenn der Stempel in der Zeichnung nach links fährt. Der Antrieb des Stempels kann in verschiedener Art und Weise erfolgen. Es ist beispielsweise ein Hand-Spindelantrieb möglich, bei dem sich Widerhaken an der radialen Wand 15 abstützen, um die entlang der Achse 35 sich erstreckende Spindel gegen den Widerstand des Stufenstempels 30 abzustützen. Zum Antrieb des Stempels 30 kann auch eine pneumatisch oder hydraulisch angetriebene Kolbenstange verwendet werden.

Der Stempel 30 versucht, den Überstand 2 zu stauchen, wodurch sich dieser in seinem mittleren Bereich 5 aufwölbt und schließlich ausknickt, wodurch zwei konische Bereiche 6 und 7 entstehen, die sich im Verlauf der Stempelbewegung immer steiler aufstellen und sich schließlich als radiale Scheiben erstrecken, wie in Fig. 3 gezeigt. Die Scheiben 6 und 7 werden aufeinander gepreßt und verbinden sich wenigstens teilweise miteinander. Da der Bereich 3 des Rohres 1 gut angewärmt worden ist, bildet sich eine saubere Krümmung am radial inneren Ende der Ringscheibe 7 aus. Eine solche Ausbildung ist zur Vermeidung einer Schwächung des hergestellten Flansches 8 an seiner Wurzel von Bedeutung.

Wie man sich durch Vergleich der Darstellungen in Fig. 2 und 3 vorstellen kann, kommen die Außenseiten der Ringscheiben 6 und 7 erst in der letzten Phase der Bewegung des Stempels 30 in Berührung mit diesem bzw. mit der Wand 15 der Preßform 10. Wenigstens die Wand 15 der Preßform besteht aus Metall. Somit kommen die Ringscheiben 6 und 7, die sich auf erhöhter Temperatur befinden, erst im letzten Augenblick der Stempelbewegung mit den kühlenden metallischen Flächen 15 und 33 in Berührung, wodurch Wärme von dem gebildeten Flansch abgezogen wird, und zwar hauptsächlich in den radial äußeren Zonen. Dadurch erfolgt die Rekristallisation des thermoplastischen Materials zonenweise von außen nach innen, und der hergestellte Flansch 8 stabilisiert sich. Es hat sich gezeigt, daß nach der Ausschalung, d.h. Entfernung des Stempels 30 und der Preßform 10, der hergestellte Flansch 8 stabil in der radialen Ebene verbleibt, d.h. keine Tendenz entwickelt, an der Stelle 9 einen Spalt zu entwickeln und eine konische Form anzunehmen.

Das erfindungsgemäß angewendete Verfahren hat den besonderen Vorzug, daß man mit der Gestaltung des Flansches 8 ziemlich frei ist. Deshalb können auch Flanschgrößen erzeugt werden, mit denen die Losflansche der DIN-Reihe 2642 verwendet werden können. Dies garantiert die Verbindungsweise der Flanschverbindungen nach üblichen Mustern.

Das Verfahren und die Vorrichtung gemäß Erfindung können in mannigfaltiger Weise abgewandelt werden. Der Rohrüberstand braucht nicht mit Warmluft erwärmt zu werden, andere Erwärmungsarten sind ebenfalls möglich, beispielsweise mittels einer Flüssigkeit oder mittels Strahlungswärme. Anstelle eines Stufenstempels kann auch ein einfacher Stempel mit einer hohlkehlenartigen Ausbildung an der Auftreffstelle des abgeschnittenen Endes des zu verarbeitenden Rohres verwendet werden.

Die Erfindung kann außer bei Rohren aus vernetztem oder Hart-Polyethylen auch bei anderen vernetzten teilkristallinen Thermoplasten verwendet werden, beispielsweise Polypropylen. Dabei muß die jeweils richtige Erweichungstemperatur des Materials eingehalten werden, bei welcher die teilkristalline Struktur aufgelöst wird. In diesem Zustand läßt sich der Werkstoff formen, und die gegebene Form läßt sich durch das erneute Teilauskristallisieren festhalten. Das erfindungsgemäße Verfahren mit der Erzeugung zweier Ringscheiben führt zu einer Spannungsverteilung in diesen Ringscheiben, die sich gewissermaßen gegenseitig aufheben, so daß eine außerordentliche Formtreue des erzeugten Flansches erzielt wird, obwohl vernetztes Material verformt worden ist.

Die Erfindung läßt sich auch auf unvernetztes Thermoplast anwenden. Man erhitzt den teilkristallinen Thermoplasten bis kurz vor Weichwerden an dem Endstück 2 der Länge ℓ und verfährt, wie bei der Beschreibung zu Fig-1 bis 3 angegeben.

Zwei Rohre mit angeformten Flanschen 8 können durch sogenannte Losflansche dichtend aufeinandergepreßt werden. Wenn sich im Innern der Rohre größerer Druck aufbaut, wird dieser zwischen den Flächen 9 wirksam und versucht, die Ringscheiben voneinander zu entfernen. Dadurch werden die Flansche 8 noch stärker aufeinandergepreßt, was die Dichtigkeit der Flanschverbindung garantiert.

## Patentansprüche

1. Verfahren zum Anformen von Flanschen an Rohren aus unvernetzten und vernetzten teilkristallinen Thermoplasten, insbesondere Polyolefinen, darunter Polyethylen, mit folgenden Schritten:
a) Bereitstellen eines Rohres (1) mit passend abgeschnittenem Rohrende (4),
b) Bestimmen eines vorgegebenen Stückes des Rohres (1), in vorbestimmtem Abstand (1) von dem Rohrende (4), so daß ein Rohrüberstand (2) zu einem Grenzbereich (3) entsteht,
c) Anwärmen des Rohrüberstandes (2) und des Grenzbereichs (3),
d) Ausdehnen des Rohrüberstandes (2) in seinem mittleren Bereich (5), der sich aufwölbt, um zwei gefaltete Ringscheiben (6, 7) zu bilden, die zusammengepreßt werden;
e) Kühlen des Flansches (8);
**gekennzeichnet durch** folgende Maßnahmen:
im Schritt b) wird das Rohr (1) benachbart dem Rohrende (4) eingespannt;
im Schritt c) wird der Rohrüberstand (2) von innen und außen auf Erweichungstemperatur des teilkristallinen Thermoplasten angewärmt;
im Schritt d) erfolgt axiales Stauchen des Rohrüberstandes (2), so daß der Rohrüberstand (2) in seinem mittleren Bereich (5) ausknickt; und
im Schritt e) erfolgt stärkeres Kühlen der radial äußeren Randbereiche der Ringscheiben (6, 7), um die erneute Teilkristallisation des Termoplasten fortschreitend von außen nach innen herbeizuführen und den hergestellten Flansch (8) zu stabilisieren.

2. Verfahren nach Anspruch 1,
**dadurch gekennzeichnet, daß** der Schritt b) mittels einer teilbaren Preßform (10) aus wenigstens zwei Rohrteilschalen (11, 12) durchgeführt wird, die zwei Innendurchmesserbereiche (13, 14) aufweisen, und zwar entsprechend dem Außendurchmesser (da) des Rohres (1) bzw. dem Außendurchmesser des herzustellenden Flansches (8).

3. Verfahren nach Anspruch 1 oder 2,
**dadurch gekennzeichnet, daß** der Schritt c) durch Erwärmen des Rohres (1) von außen entsprechend der Länge (1) des Rohrüberstandes (2) und von innen entsprechend einer den Rohrüberstand übersteigenden Länge (1+a) erfolgt.

4. Verfahren nach einem der Ansprüche 1 bis 3,
**dadurch gekennzeichnet, daß** der Schritt d) mittels eines Stempels (30) erfolgt, der einen Auflagebereich (34) für das abgeschnittene Rohrende (4) aufweist.

5. Verfahren nach Anspruch 2 und 4,
**dadurch gekennzeichnet, daß** der Schritt e) durch Berührung mit metallischen Flächen (15, 33) der Preßform (10) und des Stempels (30) erfolgt.

6. Vorrichtung zum Anformen von Flanschen an Rohre aus unvernetztem und vernetztem teilkristallinen Thermoplast, insbesondere Polyolefinen, darunter Polyethylen, mit folgenden Merkmalen:
eine Heizeinrichtung mit Heizkopf (20), die zur Aufheizung des Rohres (1) von innen ausgebildet ist, und zwar entsprechend einer den Rohrüberstand (2) übersteigenden Rohrlänge, die etwas mehr (1+a) als die doppelte Flanschbreite überdeckt;
ein antreibbarer Stempel (30), der eine Auftreffstelle (34) für das abgeschnittene Rohrende (4) aufweist;
ein Widerlager, das zur Zusammenarbeit mit dem Stempel(30) vorgesehen ist, um den sich formenden Flansch zwischen Widerlager und Stempel einzuklemmen;
**gekennzeichnet durch** folgende Ausbildung:
das Widerlager ist eine teilbare Preßform (10), die aufeinander passende Teilschalen (11, 12) aufweist, die jeweils einen Bereich (13) engen Durchmessers und einen Bereich (14) weiten Durchmessers bestimmen, wobei der Bereich (13) engen Durchmessers zum Einspannen des Rohres (1) - auch mit Rücksicht auf dessen Erwärmung und damit Ausdehnung-ausgelegt ist und der Bereich (14) weiten Durchmessers zur Aufnahme eines Rohrüberstandes (2) und Formung des herzustellenden Flansches (8) ausgebildet ist;
der Heizkopf (20) ist zur Aufheizung des Rohres (1) auch von außen ausgebildet, und zwar entsprechend einer Rohrlänge (1) mit doppelter Flanschbreite;
der Stempel (30) weist an seinen radial inneren Berührungssstellen mit dem sich bildenden Flansch (6, 7) erste Wandbereiche (31, 34) auf, die auf eine dem angewärmten Rohrüberstand (2) entsprechende Temperatur erwärmbar sind oder eine solche - geringe - Wärmeleitfähigkeit besitzen, daß die Teilkristallisation bei der Berührung während der Verformung vermieden werden kann;
der Stempel (30) weist ferner einen zweiten, radial äußeren Wandbereich (33) auf, der mit dem gebildeten Flansch (8) in Kontakt kommt und eine solche - niedrige - Temperatur haben kann bzw. eine solche - hohe - Wärmeleitfähigkeit aufweist, daß der Thermoplast auf teilkristalline Bedingungen herabgekühlt werden kann.

7. Vorrichtung nach Anspruch 6, **dadurch gekennzeichnet, daß** die Teilschalen (11, 12) an ihrem axialen Ende entgegengesetzt zu dem Bereich (14) weiten Durchmessers Klemmvorsprünge (16) aufweisen, die in zusammengebautem Zustand der Preßform (10) das Rohr (1) mit einem größeren Abstand vom abgeschnittenen Rohrende (4) einspannen, als es dem Rohrüberstand (2) entspricht.

8. Vorrichtung nach Anspruch 6 oder 7, **dadurch gekennzeichnet, daß** die Teilschalen als Halbschalen (11, 12) ausgebildet sind.

9. Vorrichtung nach einem der Ansprüche 6 bis 8, **dadurch gekennzeichnet, daß** die Teilschalen aus Metall bestehen.

10. Vorrichtung nach einem der Ansprüche 6 bis 9, **dadurch gekennzeichnet, daß** der Heizkopf (20) mit einem Warmluftheizgerät kuppelbar ist und eine äußere Muffe (22) zum Umgeben des Rohrüberstandes (2) sowie eine innere Prallscheibe (23) zur Warmluftabdichtung im Inneren des Rohres entsprechend der gewünschten Aufheizlänge (1+a) aufweist.

11. Vorrichtung nach Anspruch 10, **dadurch gekennzeichnet, daß** die Muffe (22) an ihrem hinteren Ende mit einer ringförmigen Aufsteckkupplungshälfte (21) und einem Prallscheibenhalter (24) verbunden ist, der eine Nabe (25) mit Luftdurchlaßöffnungen (26) aufweist, wobei in der Nabe (25) eine Stange (27) befestigt ist, die an ihrem freien Ende die Prallscheibe (23) trägt.

12. Vorrichtung nach Anspruch 10 oder 11,
**dadurch gekennzeichnet, daß** die Muffe (22) an ihrem vorderen Ende mit Luftdurchlaßöffnungen (28) versehen ist.

13. Vorrichtung nach einem der Ansprüche 6 bis 12, **dadurch gekennzeichnet,**
**daß** der Stempel (30) als Stufenstempel mit einem Bereich (31) dünnen Durchmessers entsprechend dem Innendurchmesser (di) des Rohres und einem Bereich (32) dicken Durchmessers entsprechend dem Außendurchmesser des herzustellenden Flansches (8) ausgebildet ist, und
**daß** der Bereich (31) dünnen Durchmessers und der Auftreffbereich (34) für das abgeschnittene Rohrende (4) des Stufenstempels (30) aus Kunststoff bestehen.

14. Vorrichtung nach einem der Ansprüche 6 bist 13,
**dadurch gekennzeichnet, daß** der Stempel einen radial äußeren Ringbereich (33) aus Metall und einen radial inneren Bereich (34) aus Kunststoff aufweist.

15. Vorrichtung nach einem der Ansprüche 6 bis 14,
**dadurch gekennzeichnet, daß** der Stempel (30) über eine mechanische Spindel antreibbar ist.

16. Vorrichtung nach einem der Ansprüche 6 bis 14,
**dadurch gekennzeichnet, daß** der Stempel 30 über eine Kolbenstange antreibbar ist.

## Claims

1. A method of forming flanges on tubes made of partly crystalline thermoplastics, cross-linked or otherwise, particularly polyolefins including polyethylene, with the following steps:
a) preparing a tube (1) with a suitably cut-off end (4),
b) deciding on a given piece of the tube (1) at a given distance (1) from the end (4) so that a length (2) of tube projecting to a limit zone (3) is obtained,
c) heating the projecting length (2) and the limit zone (3),
d) expanding the projecting length (2) in its middle zone (5), which curves to form two folded annular discs (6, 7) which are compressed, and
e) cooling the flange (8);
**characterised by** the following features:
in step b) the tube (1) is clamped near the end (4);
in step c) the projecting length (2) is heated internally and externally to the softening temperature of the partly crystalline thermoplastic;
in step d) the projecting length (2) is compressed so that the projecting length (2) buckles in its middle zone (5), and
in step e) the radially outer edge zones of the annular discs (6, 7) are more intensively cooled in order to induce renewed partial recrystallisation of the thermoplastic progressively from the exterior inwards and stabilise the flange (8) formed.

2. A method according to claim 1, **characterised in that** step b) is effected by a divisible press mould (10) comprising at least two tubular component shells (11, 12) which have two inside diameter zones (13, 14) corresponding respectively to the outside diameter (da) of the tube (1) and to the outside diameter of the flange (8) being produced.

3. A method according to claim 1 or 2,
**characterised in that** step c) is effected by heating the tube (1) from the exterior along the length (1) of the projecting part (2) and internally along a length (1+a) greater than the projecting part.

4. A method according to any of claims 1 to 3,
**characterised in that** step d) is effected by a punch (30) having a support zone (34) for the cut-off pipe end (4).

5. A method according to claims 2 and 4,
**characterised in that** step e) is effected by contact with metal surfaces (15, 33) of the press mould (10) and of the punch (30).

6. A device for forming flanges on tubes made of partly crystalline thermoplastic, cross-linked or otherwise, particularly polyolefins including polyethylene, having the following features:
a heating device with a heating head (20) adapted to heat the pipe (1) from the interior along a length greater than the projecting length (2) and covering somewhat more (1+a) than twice the width of the flange;
a drivable punch (30) having a place of impact (34) for the cut-off pipe end (4), and
an abutment adapted to co-operate with the punch (30) in order to clamp the flange being formed between the abutment and the punch;
**characterised by** the following construction:
the abutment is a divisible press mould (10) comprising component shells (11, 12) which fit together and each have a narrow-diameter zone (13) and a wide-diameter zone (14), the narrow-diameter zone (13) being designed to clamp the tube (1)-also allowing for heating and consequent expansion thereof - and the wide-diameter zone (14) being adapted to receive a projecting length (2) of tube and form the required flange (8);
the heating head (20) is also adapted to heat the tube (1) from the exterior along a length (1) equal to twice the width of the flange;
the punch (30), at its radially inner places in contact with the flange (6, 7) being formed, has first wall zones (21, 34) which are heatable to a temperature corresponding to the heated projecting length (2) or have a thermal conductivity low enough to avoid partial crystallisation on contact during the shaping process, and
the punch (30) has a second radially outer wall zone (33) which comes into contact with the flange (8) formed and can have a low enough temperature or a high enough thermal conductivity for the thermoplastic to be coolable down to partial-crystallisation conditions.

7. A device according to claim 6, **characterised in that** the component shells (11, 12) at their axial end opposite the wide-diameter zone (14) have clamping projections (16) which, when the press mould (10) is in the assembled state, clamp the tube (1) at a distance from the cut-off tube end (4) greater than that corresponding to the projecting length (2) of tube.

8. A device according to claim 6 or 7,
**characterised in that** the component shells are half-shells (11, 12).

9. A device according to any of claims 6 to 8,
**characterised in that** the component shells are of metal.

10. A device according to any of claims 6 to 9,
**characterised in that** the heating head (20) can be coupled to a hot-air heating device and has an outer sleeve (22) for surrounding the projecting length (2) of tube and an inner baffle plate (23) for sealing off the hot air inside the tube corresponding to the desired heating length (1+a).

11. A device according to claim 10, **characterised in that** the sleeve (22) at its rear end is connected to an annular attachable coupling half (21) and a baffle-plate holder (24) having a hub (25) with air passage openings (26), a rod (27) being fastened in the hub (25) and bearing the baffle plate (23) at its free end.

12. A device according to claim 10 or 11,
**characterised in that** the sleeve (22) has air passage openings (28) at its front end.

13. A device according to any of claims 6 to 12,
**characterised in that** the punch (30) is a stepped punch having a thin-diameter zone (31) corresponding to the inside diameter (da) of the tube and a thick-diameter zone (32) corresponding to the outside diameter of the flange (8) being produced, and the thin-diameter zone (31) and the impact zone (34) for the cut-off tube end (4) of the stepped punch (30) are of plastics.

14. A device according to any of claims 6 to 13,
**characterised in that** the punch has a radially outer metal annular zone (33) and a radially inner plastic zone (34).

15. A device according to any of claims 6 to 14,
**characterised in that** the punch (30) is drivable via a mechanical spindle.

16. A device according to any of claims 6 to 14,
**characterised in that** the punch (30) is drivable via a piston rod.

## Revendications

1. Procédé pour la formation de brides sur des tubes réalisés avec des matières thermoplastiques partiellement cristallines réticulées et non réticulées, notamment des polyoléfines, et parmi ces dernières du polyéthylène, au moyen des étapes suivantes:
a) préparation d'un tube (1) possédant une extrémité (4) découpée de façon adaptée;
b) détermination d'un tronçon prédéterminé du tube (1), à une distance prédéterminée (1) de l'extrémité (4) du tube de sorte qu'il apparaît une partie (2) du tube en saillie par rapport à une zone limite (3),
c) chauffage de la partie en saillie (2) du tube et de la zone limite (3),
d) élargissement de la partie en saillie (2) du tube dans sa partie médiane (5), qui se cintre, de manière à former deux disques annulaires repliés (6, 7), que l'on comprime;
e) refroidissement de la bride (8);
**caractérisé par** les dispositions suivantes:
lors de l'étape b) , le tube (1) est serré au voisinage de son extrémité (4);
lors de l'étape c) la partie en saillie (2) du tube est chauffée de l'intérieur et de l'extérieur à la température de ramollissement de la matière thermoplastique partiellement cristalline;
lors de l'étape d), il se produit un refoulement axial de la partie saillante (2) du tube, de sorte que la partie saillante (2) du tube est coudée dans une zone médiane (5); et
lors de l'étape e), un refroidissement plus intense des parties marginales, extérieures du point de vue radial, des disques annulaires (6, 7) est exécuté pour l'obtention de la cristallisation partielle renouvelée de la matière thermoplastique selon une progression de l'extérieur vers l'intérieur et pour stabiliser la bride formée(8).

2. Procédé selon la revendication 1, **caractérisé en ce que** l'étape b) est exécutée à l'aide d'un moule de pressage (10) pouvant être divisé et constitué par la coque partielle de deux tubes (11, 12), qui comportent deux parties intérieures (13, 14), à savoir conformément au diamètre extérieur (da) du tube (1) ou au diamètre extérieur de la bride (8) devant être formée.

3. Procédé selon la revendication 1 ou 2,
**caractérisé en ce que** l'étape c) s'effectue par chauffage du tube (1) depuis l'extérieur, conformément à la longueur (1) de la partie saillante (2) du tube et à partir de l'intérieur conformément à une longueur (1 + a) dépassant la partie saillante du tube.

4. Procédé selon l'une des revendications 1 à 3,
**caractérisé en ce que** l'étape (d) est réalisée à l'aide d'un poinçon (30), qui possède une partie d'appui (34) pour l'extrémité découpée (4) du tube.

5. Procédé selon les revendications 2 et 4,
**caractérisé en ce que** l'étape e) s'effectue par venue en contact avec des surfaces métalliques (15, 33) du moule de pressage (10) et du poinçon (30).

6. Dispositif pour mouler des brides sur des tubes formés d'une matière thermoplastique partiellement cristalline réticulée et non réticulée, notamment des polyoléfines, et parmi ces dernières du polyéthylène, présentant les caractéristiques suivantes:
un dispositif de chauffage comportant une tête de chauffage (20), qui est agencée de manière à chauffer le tube (1) à partir de l'intérieur, et ce en fonction d'une longueur de tube qui dépasse la partie saillante (2) du tube et qui recouvre par exemple une étendue égale à environ (1 + a) supérieure au double de la largeur de la bride; un poinçon (30) pouvant être entraîné, qui possède une zone d'impact (34) pour l'extrémité découpée(4) du tube;
une butée, qui est destinée à coopérer avec le poinçon (30) de manière à serrer la bride, qui se forme, entre la butée et le poinçon;
**caractérisé par** l'agencement suivant:
la butée est un moule de pressage pouvant être divisé (10), qui comporte des coques partielles (11, 12) adaptées l'une à l'autre et qui déterminent respectivement une zone (13) de faible diamètre et une zone (14) de diamètre important, la partie (13) de faible diamètre étant agencée de manière à serrer le tube (1) - également compte tenu de l'échauffement de ce dernier et par conséquent de sa dilatation -, et la partie (14) de grand diamètre est agencée de manière à loger une partie saillante (2) du tube et former la bride (8) devant être formée;
la tête de chauffage (20) est agencée de manière à chauffer le tube (1) également de l'extérieur, et ce conformément à une longueur de tube (1) avec une largeur de bride double;
le poinçon (30) possède au niveau de ses parties de contact, intérieures du point de vue radial, avec la bride (6, 7) qui se forme, des premiers éléments de paroi (31, 34), qui peuvent être chauffés à une température qui correspond à la partie saillante chauffée (2) du tube ou possèdent une conductibilité thermique - faible - telle que la cristallisation partielle lors du contact pendant la déformation peut être évitée;
le poinçon (30) possède un second élément de paroi (33) extérieur du point de vue radial, qui vient en contact avec la bride formée (8) et peut posséder une température-faible - ou une conductibilité thermique - élevée - telle que la matière thermoplastique peut être refroidie dans des conditions d'état partiellement cristallin.

7. Dispositif selon la revendication 6,
**caractérisé en ce que** les coques partielles (11, 12) possèdent, sur leur extrémité axiale, à l'opposé de la partie (14), de grand diamètre, des appendices saillants de serrage (16), qui, lorsque le moule de serrage (10) est à l'état assemblé, serrent le tube (1) à une distance par rapport à l'extrémité découpée (4) du tube, qui est supérieure à ce qui correspond à la partie saillante (2) du tube.

8. Dispositif selon la revendication 6 ou 7,
**caractérisé en ce que** les coques partielles sont agencées sous la forme de demi-coques (11, 12).

9. Dispositif selon l'une des revendications 6 à 8, **caractérisé en ce que** les coques partielles sont formées d'un métal.

10. Dispositif selon l'une des revendications 6 à 9, **caractérisé en ce que** la tête de chauffage (20) peut être couplée à un appareil délivrant de l'air chaud et possède un manchon extérieur (22) servant à entourer la partie saillante (2) du tube ainsi qu'un disque intérieur d'impact (23) pour réaliser un blocage de l'air chaud à l'intérieur du tube, conformément à la longueur désirée de chauffage (1 + a).

11. Dispositif selon la revendication 10,
**caractérisé en ce que** le manchon (22) est relié, au niveau de son extrémité arrière, à une moitié d'accouplement à enfichage (21) de forme annulaire et à un dispositif (24) de retenue du disque d'impact, qui comporte un moyeu (25) possédant des ouvertures (26) de passage de l'air, une tige (27), qui porte sur son extrémité libre le disque d'impact (23), étant fixée dans le moyeu (25).

12. Dispositif selon la revendication 10 ou 11,
**caractérisé en ce que** le manchon (22) comporte, sur son extrémité avant, des ouvertures de passage de l'air (28).

13. Dispositif selon l'une des revendications 10 à 12, **caractérisé en ce**
**que** le poinçon (30) est réalisé sous la forme d'un poinçon étagé possédant une partie (31) de faible diamètre correspondant au diamètre intérieur (di) du tube, et une partie (32) de diamètre important correspondant au diamètre extérieur de la bride (8) à former, et
**que** la partie (31) de faible diamètre et la partie d'impact (34) pour l'extrémité découpée (4) du tube du poinçon étagé (30) sont réalisées en matière plastique.

14. Dispositif selon l'une des revendications 6 à 13, **caractérisé en ce que** le poinçon possède une partie annulaire (33), extérieure du point de vue radial, formée d'un métal et une partie (34), intérieure du point de vue radial, formée d'une matière plastique.

15. Dispositif selon l'une des revendications 6 à 14, **caractérisé en ce que** le poinçon (30) peut être entraîné par l'intermédiaire d'une broche mécanique.

16. Dispositif selon l'une des revendications 6 à 14, **caractérisé en ce que** le poinçon (30) peut être entraîné par l'intermédiaire d'une tige de piston.
